# EUROPEAN PATENT SPECIFICATION

(11) **EP 4 155 755 B1**
(45) Date of publication and mention of the grant of the patent: **02.07.2025**
(21) Application number: 21198804.3
(22) Date of filing: 24.09.2021
(51) Int. Cl.: G01S 7/02, G01S 13/931

(54) **RADAR RESOURCE REQUIREMENT PREDICTION**
VORHERSAGE DES RESSOURCENBEDARFS EINES RADARS
PRÉDICTION D'EXIGENCE DE RESSOURCES RADAR

(43) Date of publication of application: 29.03.2023
(73) Proprietor: Magna Electronics Sweden AB, 447 37 Vårgårda (SE)
(72) Inventor: HERBERTSON, Hans, Vårgårda (SE); RYDSTRÖM, Mats, Vårgårda (SE); ERIKSSON, Olof, Vårgårda (SE)
(74) Representative: Westpatent AB

(56) References cited:
- CN-A- 111 491 252
- CN-A- 113 194 538
- US-A1- 2017 293 016

## Description

The present disclosure relates to methods and devices for operating an automotive radar system involving a plurality of radar transceivers which are coordinated from a central or distributed scheduling entity.

Modern vehicles for road transport, such as cars and trucks, normally comprise one or more radar transceivers arranged to sense the environment around the vehicle, e.g., detect and classify objects, in order to perform functions such as adaptive cruise control (ACC), emergency brake assist (EBA), advanced driver assistance systems (ADAS) and autonomous drive (AD) functionality.

Automotive radar transmission is today largely uncoordinated, which means that radars may interfere with each other as radar transmission signals cross or come close to each other in frequency. When this happens, a burst of interference can be observed somewhere within the received signal. This is of course undesired since it makes object detection more difficult.

EP 3 865 896 A1 discloses a system for automotive radar operation where the radar transceivers are instead coordinated by a central scheduling entity, which greatly reduces interference issues.

CN 113 194 538 A discloses radar signal time-frequency resource allocation where a road side unit receives a time-frequency resource allocation requests sent by radars within the responsibility range of the roadside unit.

CN 111 491 252 A discloses a network device that receives vehicle position information and automobile radar parameters sent by at least two vehicles, and predicts interference between the automobile radars of the vehicles based on these parameters. The network device allocates access resources to the automotive radars of the vehicles according to the interference situation between the automotive radars of the vehicles, and sends resource configuration information to the vehicles respectively.

US 2017/293016 A1 discloses a vehicle including a sensor receiving data from an external computing device indicative of at least one other vehicle in an environment of the vehicle, the other vehicles including sensors. A likelihood of interference between the sensors of the vehicles is determined and an adjustment is initiated to reduce the likelihood of interference between the sensors.

Radar operation normally consumes considerable bandwidth in order to provide sufficient radar distance resolution. Since frequency resources for automotive radar operation are limited, there is a desire to provide radar systems of increased spectral efficiency, where more radar transceivers can operate at high performance in a smaller frequency band.

It is an object of the present disclosure to provide techniques which increase spectral performance in coordinated automotive radar systems.

This object is achieved by an automotive radar transceiver system, comprising a radar transceiver arranged to transmit radar signals in time-frequency resources dynamically allocated by a remote scheduler function. The system further comprises an environment perception system arranged to obtain environment data indicative of a surrounding traffic environment of the radar transceiver, and a radar resource requirement prediction module configured to estimate a future time-frequency resource requirement for radar operation, based on the environment data.

The radar transceiver is arranged to request time-frequency resources for radar operation from the remote scheduler function based on the estimated future time-frequency resource requirement.

This reduces the impact of delays in the request-grant procedure since the request now comes sooner. Since more delays can be tolerated in the communication with the scheduler function, the requirements on the actual scheduler function can be reduced, as well as the requirements on the communication link to and from the scheduler function.

According to some aspects, the environment perception system comprises the radar transceiver.

This means that the perception system as an alternative may comprise the radar transceiver only, and no other sensors. Then, the entire system can be integrated into the radar transceiver, which is an advantage.

According to some aspects, the environment perception comprises any of a vision based sensor, a further radar sensor, and/or a lidar sensor.

This means that if, for example, a camera sees a large number of targets up ahead of the vehicle, then an increased assignment of radar transmission resources can be requested, in order to reliably detect and classify the targets appearing up ahead.

According to some aspects, the environment perception system comprises a vehicle telematics system arranged to obtain information related to the environment surrounding the radar transceiver via wireless link from one or more external entities.

This means that if it is externally decided that there is almost no traffic in an area, or that the area is crowded with vehicles, this can be communicated information to vehicles in the area, which may then adapt their radar transmission resources correspondingly.

According to some aspects, the vehicle telematics system is arranged to obtain information related to time-frequency resources dynamically allocated for radar operation by vehicles in vicinity of the radar transceiver.

In this way, vehicles up ahead of the radar transceiver can report how much resources that are required in a given environment.

According to some aspects, the radar resource requirement prediction module is configured to estimate the future time-frequency resource requirement as a pre-determined bandwidth in case an object is detected for the first time in the environment.

In this way, the system can work in a more efficient manner since the prediction module can propose to the radar transceiver to immediately adapt its bandwidth before an actual request comes from, e.g., a target tracking function that may require increased bandwidth to resolve a target using a high bandwidth transmission.

According to some aspects, the radar resource requirement prediction module is configured to estimate the future time-frequency resource requirement based on a pre-determined mapping between radial distance to a target and pre-determined energy.

More energy is often needed to be able to detect targets that are relatively far away from the radar transceiver, and if it is desired to determine if there is an actual target present, or just clutter, more energy is needed to increase an effective range for the radar transceiver.

According to some aspects, the radar resource requirement prediction module comprises a database of previous environment perception data and corresponding radar resource requirements, wherein the radar resource requirement prediction module is arranged to estimate the future time-frequency resource requirement based on the database and on a current environment perception.

This means that the radar resource requirement prediction module is adapted to perform a prediction by comparing the current environment perception with environment perceptions stored in the database, and determine if something similar is found.

According to some aspects, the radar resource requirement prediction module comprises a machine learning structure configured with an input port connected to the environment perception system and an output port arranged to generate the estimated future time-frequency resource requirement.

This means that a trained machine learning structure may be able to converge towards a structure able to predict a future radar resource requirement based on one or more types of environment perception data.

Other examples are apparent from the dependent claims.

This object is also achieved by a vehicle and methods according to the appended claims.

### BRIEF DESCRIPTION OF THE DRAWINGS

The present disclosure will now be described in detail with reference to the appended drawings, where:
- Figure 1: illustrates a coordinated radar system;
- Figure 2: shows an example dynamic allocation of radar resources;
- Figure 3: schematically illustrates resource scheduling delay;
- Figure 4: shows a radar resource requirement prediction system;
- Figure 5: is a flow chart illustrating methods;
- Figure 6: schematically illustrates a control unit; and
- Figure 7: shows an example computer program product.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms **"a", "an"** and **"the"** are intended to include the plural forms as well, unless the context clearly indicates otherwise.

Spectral resources for radar operation are becoming more and more scarce as the number of radar transceivers in the traffic environment increase. Spectral efficiency therefore becomes an issue, **i.e.,** the number of radar transceivers that can operate simultaneously within a given frequency band and time window. Most radar systems today are relatively inefficient when it comes to spectral efficiency. For instance, a normal FMCW radar system normally sweeps with a constant repetition time period, or duty cycle, even if no targets of interest for the control of the vehicle are near. The bandwidth used for each radar transmission is also normally constant, even if the current traffic scenario does not require high resolution radar imaging for safely controlling the vehicle. This way of operating a radar transceiver is inefficient from a spectral point of view.

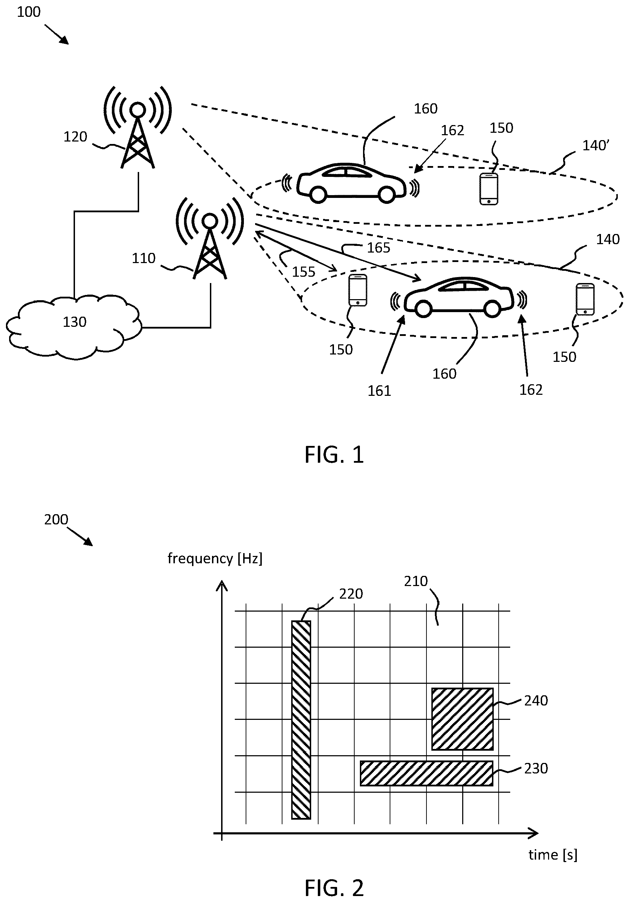

Figure 1 shows parts of a cellular access network 100 comprising radio base stations 110, 120 connected to a core network 130. The radio base stations 110, 120 as well as the different entities of the core network 130 will be referred to herein as network nodes. Thus, the term network node is to be construed broadly herein to encompass any form of radio access network infrastructure device, or software module executed on processing circuitry within the cellular access network 100. It is appreciated that the radio base stations 110, 120 may also be realized as transmission points (TRP) in a wireless network, where the radio units are also at least in part realized as part of the core network 130.

The radio base stations 110, 120 provide cellular access 155 to a number of wireless devices 150 over respective coverage areas 140, 140'. As part of this cellular access, the radio base stations 110, 120 generate and transmit synchronization signals which are broadcasted over the coverage areas 140, 140', where they are used by the wireless devices 150 to synchronize both in time and in frequency with respect to the cellular access network 100. These synchronization signals are normally part of a global standard, meaning that they will have the same format regardless of where in the world they are transmitted.

Most cellular access networks today are based on one of the standards defined by the third generation partnership program (3GPP). These standards comprise fourth generation (4G) and fifth generation (5G) systems, and work is underway in defining sixth generation (6G) systems.

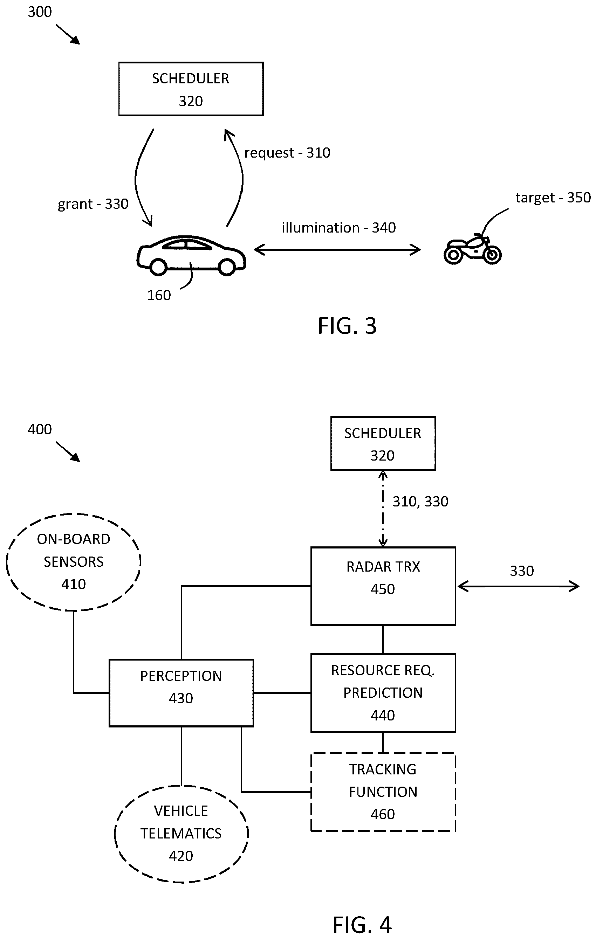

One or more vehicles 160 are also located within the coverage areas 140, 140' of the radio base stations 110, 120. These vehicles 160 comprise corresponding radar transceivers 161, 162 which may be controlled by one or more vehicle electronic control unit (ECU) in the vehicle 160. The radar transceivers 161, 162 are comprised in a corresponding radar system, such as a radar transceiver system 400 that will be discussed later with reference to Figure 4.

The present disclosure relates to a technique where the time-frequency resources used by a given radar transceiver are adapted according to need, and where the time-frequency resources of the vehicles within a given area are coordinated from a central entity, as discussed in EP 3 865 896 A1. This way a radar transceiver only uses as much resources as it requires to fulfil the task at hand. For instance, if no targets are nearby, then perhaps the transmission repetition interval can be extended somewhat without jeopardizing vehicle safety, since it is highly unlikely that a nearby target will appear out of nowhere. Also, if only far away targets are detected, then a single radar transmission at high bandwidth may be sufficient for classifying the far away target or targets, and a reduced bandwidth radar transmission can be used in-between high bandwidth transmissions to keep track of, i.e., monitor, the far away object or objects to make sure they remain unthreatening to the ego-vehicle. Some aspects of the technique are described in EP 3 865 896 A1, and the present disclosure builds on the ideas introduced therein.

The radar system requests resources from the communications network when needed. For instance, in case the radar system needs to check if a target is actually two objects located close together, then larger bandwidth resources may be requested compared to normal operation. Also, if the radar system needs to detect targets far away, or smaller targets associated with reduced radar cross section (RCS), then a transmission resource with extended time duration can be requested in order to increase transmitted energy and thereby improve on signal to noise ratio (SNR).

Figure 2 illustrates a range 200 of time-frequency resources. Each block 210 amounts to a given time period of transmission in a certain frequency slot. The slots may, e.g., correspond to one or more resource blocks as discussed in 3GPP TS 36.400 V15.8.0. Some different transmission resource requests are exemplified in Figure 2. A transmission grant indicates one or more time-frequency resources where transmission may take place, one transmission grant 220 extends over a wide frequency band and is therefore likely to result in radar operation at an increased spatial resolution. This type of transmission grant may be awarded to a radar system wishing to resolve two closely spaced targets, or which is in close proximity to some object. Another transmission grant 230 is on a smaller bandwidth, but over a longer time period. This transmission grant 230 is likely to result in a reduced spatial resolution radar operation, but the range of the radar transceiver 161, 162 will not be significantly affected due to the prolonged transmission duration.

One transmission grant 240 may be intended for some other radar system or for some normal wireless device which does not perform any radar operation. The cellular access network 100 does not need to know which grant that is intended for radar operation and which grant that is intended for communications only. It is appreciated that the requested and/or granted transmission resources need not be contiguous in frequency nor in time.

Figure 3 illustrates a potential problem with the approach to dynamic radar resource allocation discussed above. A vehicle 160 is approaching a target 350 and wishes to perform an initial high quality detection of the target in order to e.g., correctly classify it. The vehicle 160 therefore requests 310 radar resources from a scheduler function 320 which manages coordination of the radar transceivers within the local area.

The request may comprise a request or a given bandwidth, and/or a given time slot duration for transmission of radar signals.

In case the vehicle radar system is an OFDM-based radar system, then the request may specify the resources in terms of resource elements, i.e., number of sub-carriers an OFDM symbols.

The scheduler 320 receives the request and, accounting also for requests from other vehicle radar systems, responds with a grant 330 where the radar resource assignment is indicated. The vehicle 160 may then proceed to illuminate 340 the target 350 with electromagnetic energy according to the transmission grant 330.

Now, if the delay incurred during this request process, i.e., request-scheduling-grant-transmission is too long, then the vehicle may have gotten too close to the new target 350 for comfort. This may not be acceptable, and may require the vehicle 160 to always have a base or default level of radar resources available or radar operation. The longer the expected delay - the more base resources will be required.

In the extreme case of a very long delay, the vehicle 160 will have to maintain a constant allocation of radar transmission resources which also satisfies the worst case requirements of the vehicle radar system. However, if the expected delay incurred during the request process is very short, then the vehicle will not need so much base level resources, which means that the overall spectral efficiency of the automotive radar system increases. In other words, if all vehicles know that they can receive the required transmission resources in time, every time, then there is no need for any constant allocation of radar resources.

It has been realized that the situation can be improved if the request can be made sooner. Ideally, the request is made before the need for additional radar transmission resources even arises. This becomes possible if the radar resource requirement is predicted by the vehicle. In other words, if the vehicle can predict what radar resources it will require in the future, then it can request those resources sooner, and have them available in good time before they are actually required. This in turn means that larger delays can be tolerated from transmission of the request to reception of the grant.

There are several different way in which to achieve this general principle. One simple example is to just predict an increased radar resource assignment request in terms of bandwidth every time a new target is detected, since it is likely desired to be able to determine if the new target is a single target or in fact more than one target. After the high bandwidth transmission, the resource requirement is likely to reduce back to some nominal level. Another simple example is that, in case a target comes an goes at long distance, request a high energy radar resource assignment (either large bandwidth or long time duration) to illuminate target with more3 energy, and to maintain this resource request as long as the far away target remains on the detection list.

More advanced radar resource prediction methods are of course also possible. For instance, a machine learning structure can be trained to generate predictions based on a video feed from the vehicle surroundings. Thus, the machine learning structure "sees" what happens around the vehicle, and learns to predict when more or less radar transmission resources in terms of time and or bandwidth will be required.

The automotive radar systems discussed herein may also be implemented as cooperative systems, where the different radar systems work together and share experiences in order to collectively learn how to more accurately predict future radar resource requirements.

Figure 4 illustrates an automotive radar transceiver system 400 arranged to predict a future radar resource requirement, based on environment perception and/or telematics. The automotive radar transceiver system 400 comprises a radar transceiver 450 arranged to transmit radar signals in time-frequency resources dynamically allocated 310, 330 by a remote scheduler function 320. The radar transceiver 450 can for example be one of the radar transceivers 161, 162 discussed above, and be mounted to a vehicle 160. The radar transceiver can, as mentioned above, be an ordinary FMCW radar transceiver. However, as illustrated in Figure 2 above, particular advantages are obtained if the herein discussed techniques are used in an OFDM-based system, perhaps also in combination with other wireless devices, as shown in Figure 1. For instance, an access network such as the 3GPP 5G or 6G networks already have scheduling functions in place for dynamically scheduling radio resources between users. This infrastructure can be re-used with advantage also for scheduling automotive radar transceivers.

The system 400 further comprises an environment perception system 430 arranged to obtain environment data indicative of a surrounding traffic environment of the radar transceiver 450. The environment perception system may only comprise the radar transceiver 450, but may optionally also comprise other sensors, such as vision-based sensors (cameras, IR sensors, and the like), and other radar sensors. Optional on-board sensors 410 are indicated in Figure 4.

A radar resource requirement prediction module 440 is configured to estimate a future time-frequency resource requirement for radar operation, based on the environment data, as discussed above.

According to some aspects, the prediction can be based on output from a tracker 455, which also uses the environment data. The tracking function may be arranged to maintain a list of targets in the surrounding environment and to track these targets over time. Target tracking functions are generally known and will therefore not be discussed in more detail herein.

The radar transceiver 450 is arranged to request time-frequency resources for radar operation from the remote scheduler function 320 based on the estimated future time-frequency resource requirement.

This reduces the impact of delays in the request-grant procedure, as discussed previously with reference to Figure 3, since the request now comes sooner. Since more delays can be tolerated in the communication with the scheduler function 320, the requirements on the actual scheduler function can be reduced, as well as the requirements on the communication link to and from the scheduler function 320.

According to some aspects, the environment perception system 430 comprises the radar transceiver 450. For example, the perception system 430 comprises the radar transceiver 450 only, and no other sensors. In this case the entire system can be integrated into the radar transceiver, which is an advantage. According to other aspects, the environment perception system 430 comprises any of a vision based sensor, a further radar sensor, and/or a lidar sensor. For example, a camera device can be adapted to capture the current scenario in an image stream, which can then be analyzed by the resource requirement prediction function 440 in order to predict a future need for radar transmission resources. For example, if the camera sees a large number of targets up ahead of the vehicle, then an increased assignment of radar transmission resources can be requested, in order to reliably detect and classify the targets appearing up ahead.

The environment perception system 430 optionally also comprises a vehicle telematics system 420 arranged to obtain information related to the environment surrounding the radar transceiver 450 via wireless link from one or more external entities. Such entities can for example be constituted by other vehicles, network servers, etc. The automotive radar transceiver system 400 is thus arranged to receive important information from other units, indicating a future need for radar resources. Notably, the need may either be an increased need for radar transmission resources or a decreased need for radar transmission resources. Suppose for instance that some central traffic controller, such as a camera based surveillance system, determines that there is almost no traffic in an area. This central traffic controller can then communicate this information to vehicles in the area, which may then confidently reduce their consumed radar transmission resources. Similarly, if some area up ahead of the vehicle is crowded with targets, then the radar system 400 may preemptively request an increased assignment of radar transmission resources.

According to some aspects, the vehicle telematics system 420 is arranged to obtain information related to time-frequency resources dynamically allocated for radar operation by vehicles in vicinity of the radar transceiver 450. This means that vehicles up ahead of the radar transceiver 450 can report how much resources that are required in a given environment.

According to some aspects, the radar resource requirement prediction module 440 is configured to estimate the future time-frequency resource requirement as a pre-determined bandwidth in case an object is detected for the first time in the environment.

For example, if a new target is detected and it is desired to see if the target is constituted by one or more separate targets, more bandwidth is needed to resolve the targets. The prediction module 440 can then propose to the radar transceiver 450 to immediately request more bandwidth before an actual request comes from, e.g., a target tracking function 460 to resolve the target using a high bandwidth transmission.

According to some aspects, the radar resource requirement prediction module 440 is configured to estimate the future time-frequency resource requirement based on a pre-determined mapping between radial distance to a target and pre-determined energy.

More energy is often needed to be able to detect targets that are relatively far away from the radar transceiver 450. For example, a target detection may come and go, and if it is desired to determine if there is an actual target present, or just clutter, more energy is needed to increase an effective range for the radar transceiver 450.

According to some aspects, the radar resource requirement prediction module 440 comprises a database of previously generated environment perception data and corresponding radar resource requirements, where the radar resource requirement prediction module 440 is arranged to estimate the future time-frequency resource requirement based on the database and on a current environment perception. This means that the radar resource requirement prediction module 440 is adapted to perform a prediction by comparing the current environment perception with environment perceptions stored in the database, and determine if something similar is found. For instance, the database can comprise a number of detection lists, which a current detection list can be compared against.

According to some aspects, the radar resource requirement prediction module 440 comprises a machine learning structure configured with an input port connected to the environment perception system 430 and an output port arranged to generate the estimated future time-frequency resource requirement. The machine learning structure may be based on any of a neural network, a random forest structure, and a generative adversarial network (GAN). The machine learning structure can be trained using recorded environment perception data and following radar transmission resource requirements of, e.g., the tracking function 460 or the radar transceiver 450 itself. Computer simulation of different traffic environment scenarios can also be used in training the machine learning structure.

For instance, environment perception data can be annotated with corresponding radar resource requirement tags, and used for training the machine learning structure. The machine learning structure is then fed by the environment perception data, and updated based on the annotations. The machine learning structure will then converge towards a structure able to predict a future radar resource requirement based on one or more types of environment perception data. To summarize, according to some aspects, the machine learning structure is arranged to be trained based on environment perception data and corresponding time-frequency resource requests for radar operation at one or more vehicles 160.

According to some other aspects, the vehicle telematics system 420 is arranged to receive an at least partly trained machine learning structure configured for predicting future radar resource requirements at a given geographic location and/or time of day. This allows the vehicle radar systems to exchange machine learning structures with each other. This, in a way, is similar to sharing experience with each other, and results in collective improvement.

According to some aspects, the automotive radar transceiver system 400 comprises the target tracking function 460 arranged to generate a request for radar range and/or radar range resolution, wherein the radar resource requirement prediction module 440 is arranged to predict a future request by the target tracking function 460. This function was discussed in detail in EP 3 865 896 A1. A target tracking function 460 like that illustrated in Figure 4 can be arranged to determine radar performance requirements, e.g., based on uncertainties in a target list. These requirements can be predicted by the resource requirements prediction module 440, such that the radar transceiver becomes aware of a request from the target tracking function before the request is actually generated. Again, this reduces the sensitivity to delays incurred in the resource request process discussed above in connection to Figure 3.

According to some aspects, the radar transceiver 450 is arranged to maintain a base level request for radar time-frequency resources, and to adjust the base request based on the estimated future time-frequency resource requirement. This base level, or default level, was discussed above and relates to default operation, at some duty cycle and with some bandwidth. It is not preferred to have a constant large base level request, since this reduces the spectral efficiency of the system. However, it may be required in order to satisfy requirements on radar availability and the like. The base level request may comprise a predetermined duty cycle and fixed resource request determined in dependence of a minimum radar performance in terms of range (transmission energy) and range resolution (bandwidth).

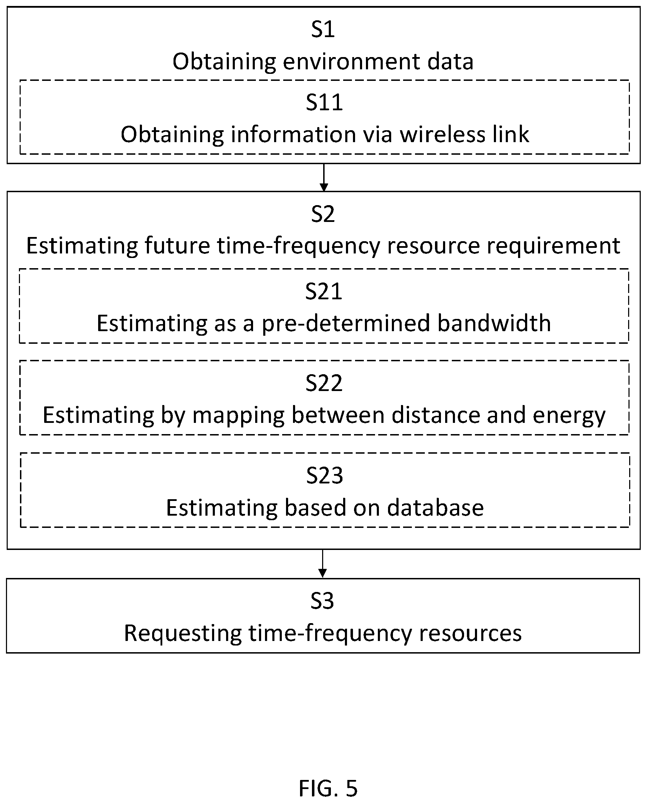

Figure 5 is a flow chart illustrating a method performed by an automotive radar transceiver system 400, comprising a radar transceiver 450 arranged to transmit radar signals in time-frequency resources dynamically allocated 310, 330 by a remote scheduler function 320. The method comprises obtaining S1 environment data indicative of a surrounding traffic environment of the radar transceiver 450, and estimating S2 a future time-frequency resource requirement for radar operation, based on the environment data. The method further comprises requesting S3 time-frequency resources for radar operation from the remote scheduler function 320 based on the estimated future time-frequency resource requirement.

According to some aspects, the method comprises obtaining S11 information related to the environment surrounding the radar transceiver 450 via wireless link from one or more external entities.

According to some aspects, the method comprises estimating S21 the future time-frequency resource requirement as a pre-determined bandwidth in case an object is detected for the first time in the environment.

According to some aspects, the method comprises estimating S22 the future time-frequency resource requirement based on a pre-determined mapping between radial distance to a target and pre-determined energy.

According to some aspects, the method comprises estimating S23 the future time-frequency resource requirement based on a database of previous environment perception data and on a current environment perception.

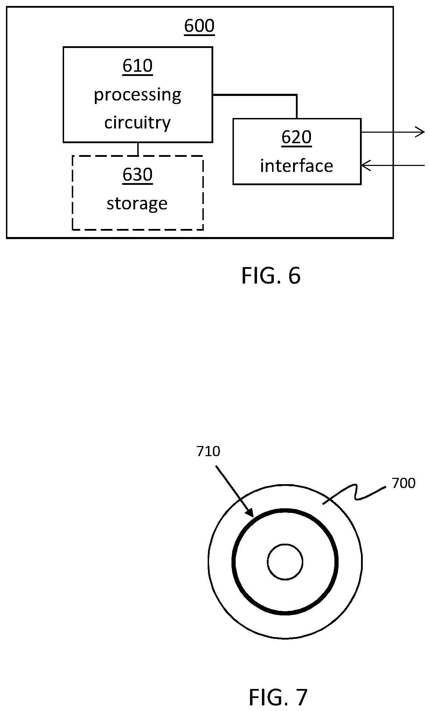

Figure 6 schematically illustrates, in terms of a number of functional units, the components of a control unit 600 according to an embodiment. Processing circuitry 610 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 630. The processing circuitry 610 may further be provided as at least one application specific integrated circuit (ASIC), or field programmable gate array (FPGA).

Particularly, the processing circuitry 610 is configured to cause the control unit 600 to perform a set of operations, or steps. These operations, or steps, were discussed above in connection to the various radar transceivers and methods. For example, the storage medium 630 may store the set of operations, and the processing circuitry 610 may be configured to retrieve the set of operations from the storage medium 630 to cause the control unit 610 to perform the set of operations. The set of operations may be provided as a set of executable instructions. Thus, the processing circuitry 610 is thereby arranged to execute methods and operations as herein disclosed.

The storage medium 630 may also comprise persistent storage, which, for example, can be any single one or combination of magnetic memory, optical memory, solid state memory or even remotely mounted memory.

The control unit 610 may further comprise a communications interface 620 for communications with at least one other unit. As such, the radar interface 620 may comprise one or more transmitters and receivers, comprising analogue and digital components and a suitable number of ports for wired or wireless communication.

The processing circuitry 610 is adapted to control the general operation of the control unit 600 e.g. by sending data and control signals to the external unit and the storage medium 630, by receiving data and reports from the external unit, and by retrieving data and instructions from the storage medium 630. Other components, as well as the related functionality, of the control unit 600 are omitted in order not to obscure the concepts presented herein.

Figure 7 shows a computer program product 700 comprising computer executable instructions 710 arranged on a computer readable medium to execute any of the methods disclosed herein.

## Claims

1. An automotive radar transceiver system (400), comprising a radar transceiver (450) arranged to transmit radar signals in time-frequency resources dynamically allocated (310, 330) by a remote scheduler function (320), the system (400) further comprising
an environment perception system (430) arranged to obtain environment data indicative of a surrounding traffic environment of the radar transceiver (450), **characterized in that** the system (400) comprises
a radar resource requirement prediction module (440) configured to estimate a future time-frequency resource requirement for radar operation, based on the environment data,
wherein the radar transceiver (450) is arranged to request time-frequency resources for radar operation from the remote scheduler function (320) based on the estimated future time-frequency resource requirement.

2. The automotive radar transceiver system (400) according to claim 1, wherein the environment perception system (430) comprises the radar transceiver (450).

3. The automotive radar transceiver system (400) according to claim 1 or 2, wherein the environment perception (430) comprises any of a vision based sensor, a further radar sensor, and/or a lidar sensor.

4. The automotive radar transceiver system (400) according to any previous claim, wherein the environment perception system (430) comprises a vehicle telematics system (420) arranged to obtain information related to the environment surrounding the radar transceiver (450) via wireless link from one or more external entities.

5. The automotive radar transceiver system (400) according to claim 4, wherein the vehicle telematics system (420) is arranged to obtain information related to time-frequency resources dynamically allocated for radar operation by vehicles in vicinity of the radar transceiver (450).

6. The automotive radar transceiver system (400) according to any previous claim, wherein the radar resource requirement prediction module (440) is configured to estimate the future time-frequency resource requirement as a pre-determined bandwidth in case an object is detected for the first time in the environment.

7. The automotive radar transceiver system (400) according to any previous claim, wherein the radar resource requirement prediction module (440) is configured to estimate the future time-frequency resource requirement based on a pre-determined mapping between radial distance to a target and pre-determined energy.

8. The automotive radar transceiver system (400) according to any previous claim, wherein the radar resource requirement prediction module (440) comprises a database of previous environment perception data and corresponding radar resource requirements, wherein the radar resource requirement prediction module (440) is arranged to estimate the future time-frequency resource requirement based on the database and on a current environment perception.

9. The automotive radar transceiver system (400) according to any previous claim, wherein the radar resource requirement prediction module (440) comprises a machine learning structure configured with an input port connected to the environment perception system (430) and an output port arranged to generate the estimated future time-frequency resource requirement.

10. The automotive radar transceiver system (400) according to claim 9, wherein the machine learning structure is arranged to be trained based on environment perception data and corresponding time-frequency resource requests for radar operation at one or more vehicles (160).

11. The automotive radar transceiver system (400) according to claim 9 or 10, wherein the vehicle telematics system (420) is arranged to receive an at least partly trained machine learning structure configured for predicting future radar resource requirements at a given geographic location and/or time of day.

12. The automotive radar transceiver system (400) according to any previous claim, comprising a target tracking function (460) arranged to generate a request for radar range and/or radar range resolution, wherein the radar resource requirement prediction module (440) is arranged to predict a future request by the target tracking function (460).

13. The automotive radar transceiver system (400) according to any previous claim, wherein the radar transceiver (450) is arranged to maintain a base level request for radar time-frequency resources, and to adjust the base request based on the estimated future time-frequency resource requirement.

14. A vehicle (160) comprising an automotive radar transceiver system (400) according to any previous claim.

15. A method performed by an automotive radar transceiver system (400), comprising a radar transceiver (450) arranged to transmit radar signals in time-frequency resources dynamically allocated (310, 330) by a remote scheduler function (320), the method comprising
obtaining (S1) environment data indicative of a surrounding traffic environment of the radar transceiver (450), **characterized in that** the method further comprises
estimating (S2) a future time-frequency resource requirement for radar operation, based on the environment data, and
requesting (S3) time-frequency resources for radar operation from the remote scheduler function (320) based on the estimated future time-frequency resource requirement.

## Patentansprüche

1. Automobilradartransceiversystem (400), umfassend einen Radartransceiver (450), der eingerichtet ist, um Radarsignale in Zeit-Frequenz-Ressourcen, die durch eine Funktion (320) eines entfernten Schedulers dynamisch zugewiesen werden (310, 330), zu übertragen, das System (400) ferner umfassend
ein Umgebungswahrnehmungssystem (430), das eingerichtet ist, um Umgebungsdaten zu erhalten, die eine umliegende Verkehrsumgebung des Radartransceivers (450) anzeigen, **dadurch gekennzeichnet, dass** das System (400) umfasst
ein Radarressourcenbedarfsvorhersagemodul (440), das konfiguriert ist, um einen zukünftigen Zeit-Frequenz-Ressourcenbedarf für einen Radarbetrieb basierend auf den Umgebungsdaten zu schätzen,
wobei der Radartransceiver (450) eingerichtet ist, um Zeit-Frequenz-Ressourcen für den Radarbetrieb von der Funktion (320) des entfernten Schedulers basierend auf dem geschätzten zukünftigen Zeit-Frequenz-Ressourcenbedarf anzufordern.

2. Automobilradartransceiversystem (400) nach Anspruch 1, wobei das Umgebungswahrnehmungssystem (430) den Radartransceiver (450) umfasst.

3. Automobilradartransceiversystem (400) nach Anspruch 1 oder 2, wobei die Umgebungswahrnehmung (430) einen beliebigen von einem sichtbasierten Sensor, einem weiteren Radarsensor und/oder einem Lidar-Sensor umfasst.

4. Automobilradartransceiversystem (400) nach einem der vorstehenden Ansprüche, wobei das Umgebungswahrnehmungssystem (430) ein Fahrzeugtelematiksystem (420) umfasst, das eingerichtet ist, um Informationen, die sich auf die Umgebung beziehen, die um den Radartransceiver (450) liegt, über eine drahtlose Verbindung von einer oder mehreren externen Einheiten zu erhalten.

5. Automobilradartransceiversystem (400) nach Anspruch 4, wobei das Fahrzeugtelematiksystem (420) eingerichtet ist, um Informationen, die sich auf Zeit-Frequenz-Ressourcen beziehen, die durch Fahrzeuge in der Nähe des Radartransceivers (450) für den Radarbetrieb dynamisch zugewiesen werden, zu erhalten.

6. Automobilradartransceiversystem (400) nach einem der vorstehenden Ansprüche, wobei das Radarressourcenbedarfsvorhersagemodul (440) konfiguriert ist, um den zukünftigen Zeit-Frequenz-Ressourcenbedarf als eine vorbestimmte Bandbreite zu schätzen, falls ein Objekt zum ersten Mal in der Umgebung erkannt wird.

7. Automobilradartransceiversystem (400) nach einem der vorstehenden Ansprüche, wobei das Radarressourcenbedarfsvorhersagemodul (440) konfiguriert ist, um den zukünftigen Zeit-Frequenz-Ressourcenbedarf basierend auf einer vorbestimmten Zuordnung zwischen einem radialen Abstand zu einem Ziel und einer vorbestimmten Energie zu schätzen.

8. Automobilradartransceiversystem (400) nach einem der vorstehenden Ansprüche, wobei das Radarressourcenbedarfsvorhersagemodul (440) eine Datenbank mit früheren Umgebungswahrnehmungsdaten und entsprechenden Radarressourcenanforderungen umfasst, wobei das Radarressourcenbedarfsvorhersagemodul (440) eingerichtet ist, um den zukünftigen Zeit-Frequenz-Ressourcenbedarf basierend auf der Datenbank und auf einer aktuellen Umgebungswahrnehmung zu schätzen.

9. Automobilradartransceiversystem (400) nach einem der vorstehenden Ansprüche, wobei das Radarressourcenbedarfsvorhersagemodul (440) eine Maschinenlernstruktur umfasst, die mit einem Eingangsanschluss, der mit dem Umgebungswahrnehmungssystem (430) verbunden ist, und einem Ausgangsanschluss konfiguriert ist, der eingerichtet ist, um den geschätzten zukünftigen Zeit-Frequenz-Ressourcenbedarf zu erzeugen.

10. Automobilradartransceiversystem (400) nach Anspruch 9, wobei die Maschinenlernstruktur eingerichtet ist, um basierend auf Umgebungswahrnehmungsdaten und entsprechenden Zeit-Frequenz-Ressourcenanforderungen für den Radarbetrieb an einem oder mehreren Fahrzeugen (160) trainiert zu werden.

11. Automobilradartransceiversystem (400) nach Anspruch 9 oder 10, wobei das Fahrzeugtelematiksystem (420) eingerichtet ist, um eine mindestens teilweise trainierte Maschinenlernstruktur aufzunehmen, die zum Vorhersagen zukünftiger Radarressourcenbedarfe an einem gegebenen geografischen Standort und/oder zu einer gegebenen Tageszeit konfiguriert ist.

12. Automobilradartransceiversystem (400) nach einem der vorstehenden Ansprüche, umfassend eine Zielverfolgungsfunktion (460), die eingerichtet ist, um eine Anforderung für eine Radarreichweite und/oder eine Radarreichweitenauflösung zu erzeugen, wobei das Radarressourcenbedarfsvorhersagemodul (440) eingerichtet ist, um eine zukünftige Anforderung durch die Zielverfolgungsfunktion (460) vorherzusagen.

13. Automobilradartransceiversystem (400) nach einem der vorstehenden Ansprüche, wobei der Radartransceiver (450) eingerichtet ist, um eine Grundstufenanforderung für Radar-Zeit-Frequenz-Ressourcen aufrechtzuerhalten und um die Grundstufenanforderung basierend auf dem geschätzten zukünftigen Zeit-Frequenz-Ressourcenbedarf anzupassen.

14. Fahrzeug (160), umfassend ein Automobilradartransceiversystem (400) nach einem der vorstehenden Ansprüche.

15. Verfahren, das durch ein Automobilradartransceiversystem (400) durchgeführt wird, umfassend einen Radartransceiver (450), der eingerichtet ist, um Radarsignale in Zeit-Frequenz-Ressourcen, die durch eine Funktion (320) des entfernten Schedulers dynamisch zugewiesen werden (310, 330), zu übertragen, das Verfahren umfassend
Erhalten (S1) von Umgebungsdaten, die eine umliegende Verkehrsumgebung des Radartransceivers (450) anzeigen,
**dadurch gekennzeichnet, dass** das Verfahren ferner umfasst
Schätzen (S2) eines zukünftigen Zeit-Frequenz-Ressourcenbedarfs für den Radarbetrieb basierend auf den Umgebungsdaten und
Anfordern (S3) der Zeit-Frequenz-Ressourcen für den Radarbetrieb von der Funktion (320) des entfernten Schedulers basierend auf dem geschätzten zukünftigen Zeit-Frequenz-Ressourcenbedarf.

## Revendications

1. Système (400) d'émetteur-récepteur radar automobile, comprenant un émetteur-récepteur radar (450) disposé de sorte à transmettre des signaux radar dans des ressources temps-fréquence attribuées dynamiquement (310, 330) par une fonction de planification à distance (320), le système (400) comprenant en outre
un système de perception d'environnement (430) disposé de sorte à obtenir des données d'environnement indicatives d'un environnement de circulation entourant l'émetteur-récepteur radar (450), **caractérisé en ce que** le système (400) comprend
un module de prédiction de demande de ressource radar (440) configuré pour estimer une demande future de ressource temps-fréquence pour le fonctionnement de radar, sur la base des données d'environnement,
dans lequel l'émetteur-récepteur radar (450) est disposé de sorte à demander des ressources temps-fréquence pour le fonctionnement de radar à la fonction de planification à distance (320) sur la base de la demande future de ressource temps-fréquence estimée.

2. Système (400) d'émetteur-récepteur radar automobile selon la revendication 1, dans lequel le système de perception d'environnement (430) comprend l'émetteur-récepteur radar (450).

3. Système (400) d'émetteur-récepteur radar automobile selon la revendication 1 ou 2, dans lequel la perception d'environnement (430) comprend un capteur basé sur la vision, un autre capteur radar et/ou un capteur lidar.

4. Système (400) d'émetteur-récepteur radar automobile selon l'une quelconque revendication précédente, dans lequel le système de perception d'environnement (430) comprend un système télématique de véhicule (420) disposé de sorte à obtenir des informations relatives à l'environnement entourant l'émetteur-récepteur radar (450) par l'intermédiaire d'une liaison sans fil à partir d'une ou plusieurs entités externes.

5. Système (400) d'émetteur-récepteur radar automobile selon la revendication 4, dans lequel le système télématique de véhicule (420) est disposé de sorte à obtenir des informations relatives à des ressources temps-fréquence attribuées dynamiquement pour le fonctionnement de radar par des véhicules à proximité de l'émetteur-récepteur radar (450).

6. Système (400) d'émetteur-récepteur radar automobile selon l'une quelconque revendication précédente, dans lequel le module de prédiction de demande de ressource radar (440) est configuré pour estimer la demande future de ressource temps-fréquence en tant que largeur de bande prédéterminée dans le cas où un objet est détecté pour la première fois dans l'environnement.

7. Système (400) d'émetteur-récepteur radar automobile selon l'une quelconque revendication précédente, dans lequel le module de prédiction de demande de ressource radar (440) est configuré pour estimer la demande future de ressource temps-fréquence sur la base d'une correspondance prédéterminée entre une distance radiale par rapport à une cible et une énergie prédéterminée.

8. Système (400) d'émetteur-récepteur radar automobile selon l'une quelconque revendication précédente, dans lequel le module de prédiction de demande de ressource radar (440) comprend une base de données de données de perception d'environnement précédent et de demandes de ressource radar correspondantes, dans lequel le module de prédiction de demande de ressource radar (440) est disposé de sorte à estimer la demande future de ressource temps-fréquence sur la base de la base de données et d'une perception d'environnement actuel.

9. Système (400) d'émetteur-récepteur radar automobile selon l'une quelconque revendication précédente, dans lequel le module de prédiction de demande de ressource radar (440) comprend une structure d'apprentissage automatique configurée avec un port d'entrée connecté au système de perception d'environnement (430) et un port de sortie disposé de sorte à générer la demande future de ressource temps-fréquence estimée.

10. Système (400) d'émetteur-récepteur radar automobile selon la revendication 9, dans lequel la structure d'apprentissage automatique est disposée de sorte à être entraînée sur la base de données de perception d'environnement et de demandes de ressource temps-fréquence correspondantes pour le fonctionnement de radar au niveau d'un ou plusieurs véhicules (160).

11. Système (400) d'émetteur-récepteur radar automobile selon la revendication 9 ou 10, dans lequel le système télématique de véhicule (420) est disposé de sorte à recevoir une structure d'apprentissage automatique au moins partiellement entraînée configurée pour prédire des demandes futures de ressource radar au niveau d'un emplacement géographique donné et/ou à un moment donné de la journée.

12. Système (400) d'émetteur-récepteur radar automobile selon l'une quelconque revendication précédente, comprenant une fonction de suivi de cible (460) disposée de sorte à générer une demande pour une portée radar et/ou une résolution de portée radar, dans lequel le module de prédiction de demande de ressource radar (440) est disposé de sorte à prédire une demande future de la fonction de suivi de cible (460).

13. Système (400) d'émetteur-récepteur radar automobile selon l'une quelconque revendication précédente, dans lequel l'émetteur-récepteur radar (450) est disposé de sorte à maintenir une demande de niveau de base pour des ressources temps-fréquence radar, et à ajuster la demande de base sur la base de la demande future de ressource temps-fréquence estimée.

14. Véhicule (160) comprenant un système (400) d'émetteur-récepteur radar automobile selon l'une quelconque revendication précédente.

15. Procédé exécuté par un système (400) d'émetteur-récepteur radar automobile, comprenant un émetteur-récepteur radar (450) disposé de sorte à transmettre des signaux radar dans des ressources temps-fréquence attribuées dynamiquement (310, 330) par une fonction de planification à distance (320), le procédé comprenant
l'obtention (S1) de données d'environnement indicatives d'un environnement de circulation entourant l'émetteur-récepteur radar (450), **caractérisé en ce que** le procédé comprend en outre
l'estimation (S2) d'une demande future de ressource temps-fréquence pour le fonctionnement de radar, sur la base des données d'environnement, et
la demande (S3) de ressources temps-fréquence pour le fonctionnement de radar à la fonction de planification à distance (320) sur la base de la demande future de ressource temps-fréquence estimée.
